Europäisches Patentamt

European Patent Office

Office européen des brevets

(11) Publication number: **0 369 595**
**A1**

## (12) EUROPEAN PATENT APPLICATION

(21) Application number: **89310323.4**

(22) Date of filing: **09.10.89**

(51) Int. Cl.5: **E04B 1/84, B32B 7/02, E04B 1/86**

(30) Priority: **10.10.88 GB 8823732**

(43) Date of publication of application:
**23.05.90 Bulletin 90/21**

(84) Designated Contracting States:
**AT BE CH DE ES FR GR IT LI LU NL SE**

(71) Applicant: **Precey, Antony David**
**27 Milford Close**
**London SE2 0DS(GB)**

(72) Inventor: **Precey, Antony David**
**27 Milford Close**
**London SE2 0DS(GB)**

(74) Representative: **Jones, Graham H.**
**Graham Jones & Company 77 Beaconsfield**
**Road Blackheath**
**London SE3 7LG(GB)**

(54) **An acoustic screen.**

(57) An acoustic screen comprising a plurality of acoustic blocks (2), each acoustic block (2) having a first part (4), a second part (6) and a third part (8), the third part (8) being positioned between the first and the second parts (4, 6), the first part (4) being formed of a sound deadening material, the third part (8) being formed of a foam material, and the acoustic blocks (2) being such that they can be assembled on top of one another to form the acoustic screen as a substantially free standing acoustic screen.

Fig.4.

EP 0 369 595 A1

# AN ACOUSTIC SCREEN

This invention relates to an acoustic screen.

Building work conducted on building sites invariably gives rise to noise. This noise can be a source of annoyance to occupiers of nearby business and residential premises. If the noise becomes too great, adjacent premises may have to be vacated with consequent disruption of business and loss of rent. Alternatively, if the noise becomes too great, occupiers of adjacent premises may obtain an injunction preventing further work from proceeding, in which case the building project may have to be abandoned or drastically re-designed.

It is an aim of the present invention to reduce the above mentioned problem.

Accordingly, this invention provides an acoustic screen comprising a plurality of acoustic blocks, each acoustic block having a first part, a second part and a third part, the third part being positioned between the first and the second parts, the first part being formed of a sound deadening material, the third part being formed of a foam material, and the acoustic blocks being such that they can be assembled on top of one another to form the acoustic screen as a substantially free standing acoustic screen.

The acoustic screen can easily be produced to form a temporary structure which is able to form a sound deadening barrier between a building site and adjacent premises. The acoustic blocks form modular units which can easily be assembled to form the acoustic screen, and which can easily be dismantled after the acoustic screen has been used for the required period of time to absorb and disperse sound coming from, for example, a building site. The acoustic screen can be left in position as long as noise is coming from a particular area and the acoustic screen can form a semi-permanent or permanent structure if noise will always be coming from a particular area, for example, as may occur in the case of a factory having machinery in one part giving rise to considerable noise and offices in another part requiring peace and quiet.

In addition to reducing sound transmission, the acoustic screen may reduce or eliminate the movement of dust from one area to another area. The acoustic screen can be assembled such that there is no damage to existing building fabrics or decor. The acoustic screen can be produced to be aesthetically acceptable and it may be produced to match or complement an existing decor. The minimum of equipment and labour are required to build and instal the acoustic screen due to the modular nature of the acoustic blocks enabling them to be easily assembled on top of one another to form the acoustic screen as a substantially free standing item. Furthermore, the acoustic screen can be quick, quiet, clean and inexpensive to instal and remove.

Preferably, the acoustic blocks are sufficiently thick that they stand freely on top of one another in a dry mounted condition, whereby the acoustic screen can be dismantled block by block after use and the acoustic blocks can then be re-used.

Where an extra rigid acoustic screen is required, auxiliary fastener means may be employed. The auxiliary fastener means may be flush fitting fasteners on the side of the acoustic blocks having the second part, and wire fasteners on the side of the acoustic blocks having the first part.

The acoustic blocks preferably have locating means for mechanically locating the acoustic blocks. The locating means may also be such as to interlock the acoustic blocks together but the locating means will primarily be employed for locating the blocks as opposed to interlocking them positively together. Various types of locating means may be employed.

The locating means preferably comprises separate elongate strip members which fit in grooves in the acoustic blocks. Preferably each acoustic block has a groove extending completely around the periphery of the acoustic block and in the plane of the acoustic block. The acoustic blocks are thus stackable in a loose fashion. However they can be located together by the strip members which fit into adjacent grooved portions in adjacent acoustic blocks.

After use of an acoustic screen formed of the acoustic blocks, the acoustics screen can easily be dismantled simply by pulling the acoustic blocks off the strip members or by pulling, pushing or otherwise removing the strip members from their grooves in the acoustic blocks. In this manner, the acoustic blocks are unlikely to become damaged during the dismantling of the acoustic wall and the acoustic blocks can thus be re-used. This can represent significant cost savings. If the strip members become damaged, they can be replaced and the cost of this replacement will be appreciably less than the cost of replacing entire acoustic blocks.

If desired, the acoustic blocks can be positively fixed together but the use of the locating means is preferred in that it assists dismantling of an acoustic screen in a quick and efficient manner, and in a way which permits the acoustic blocks to be undamaged and thus available for re-use.

As an alternative to employing locating means with the separate strip members, the locating means may be tongue and groove locating means.

In this case, the acoustic blocks may be such that each acoustic block has an upper face and one side face which are each provided with a tongue, and a lower face and one side face which are each provided with a complementary groove.

The use of the locating means may advantageously remove any direct path through which sound waves could travel. The locating means may also give alignment of the blocks in both the horizontal and the vertical planes, and may allow the acoustic blocks to be dry laid so that water or adhesive need not be used. The dry laying in turn speeds erection and dismantling and also facilitates re-use of the acoustic blocks.

The elongate strip members or the tongues may be off-set, for example to avoid having to cut off parts of some acoustic blocks when the strip members or tongues would engage each other and prevent the acoustic blocks properly locating together.

The sound deadening material of the first part is preferably woodwool. Other types of sound deadening material may be employed. The woodwool is formed of small thin strips of wood fibre in a cement base. The outer face of the first part may be rough with the wood fibre strips showing clearly. This open face helps to absorb and break up the sound. The inner face may be smoother and may contain a greater proportion of cement. The inner face may actually have a cement screed or layer.

The foam material will usually be a rigid foam material. Preferably, the foam material does not contain chlorofluorocarbons. The foam material is preferably a fire retardant plastics foam material. A presently preferred fire retardant foam material is a fire retardant polyisocyanurate. The foam material may be formed from two separate ingredients which are mixed together to form the foam material.

The third part may be formed of a material which can be formed into a smooth-faced material.

The material for the third part will usually be chosen for decorative ability, or its ability to be coated with a decorate material. Thus, for example, the acoustic wall may have a textured spray finish on its side formed by the third part of the acoustic blocks. The textured spray finish may give the acoustic wall a nice appearance so that it can blend with or complement an existing decor, and help to disguise the fact that a building site or other noisy environment exists on the other side of the acoustic wall. Furthermore, the textured spray finish may conceal the joints between the acoustic blocks, may give additional acoustic sealing, and may seal against dust.

Preferably, the material for the third part of the acoustic blocks is a resin bonded wood particle material or a gypsum bonded wood particle material. The resin and the gypsum act as base material. A resin bonded wood particle material is sold in board form under the trade mark Masterboard. A gypsum bonded wood particle material is sold in board form under the trade mark Sasmox.

Other materials for the third part may be employed. Usually the materials will be chosen to be fire retardant.

Preferably, the acoustic blocks are such that the first part is thicker than the second part, and such that the third part is thicker than the first part. Thus, for example, each one of the acoustic blocks may be one in which the first part is 50mm thick, in which the second part is 10mm thick, and in which the third part is 240mm thick. The acoustic blocks may be 1200mm or 2400mm long, 600mm high, and 300mm thick. Other dimensions for the acoustic blocks may of course be employed and the acoustic blocks can generally be formed in any suitable shape and size.

Usually, the acoustic blocks in the acoustic screen will be laid in a staggered fashion as in conventional brickwork. Generally, the acoustic blocks can be laid in any suitable and desired manner.

The acoustic screen may include corner blocks which are of the same general construction as the acoustic blocks but which have a return face at one end formed of the material for the second part. Thus the corner blocks are able to provide a properly finished 90° corner where required.

The acoustic screen may be one in which the acoustic blocks do not extend to the top of the structure but leave a gap, and in which the gap is filled with a foam material.

The foam material filling the gap may be of the same material as the foam material used for the third part of the acoustic block. Alternatively, if desired, a different foam material may be employed.

The gap may be defined by a framework prior to receiving the foam material. The framework may be formed of softwood battens.

The gap may be about 50mm at the top of the screen. The framework of softwood battens can then be provided in the gap to receive a layer of injected foam. The injected foam is effective to seal the gap against sound waves and may also assist in stabilizing the entire acoustic wall. The use of the foam material avoids any hard fixings which could lead to unwanted sound transmission. The foam expands as it cures so that it exerts a downward pressure on the acoustic wall, thus achieving a tighter fit between the different acoustic block courses.

Embodiments of the invention will now be described solely by way of example and with reference to the accompanying drawings in which:

Figure 1 is a front elevation of a first acoustic block for use in forming an acoustic screen;

Figures 2 and 3 are respectively a vertical section and a longitudinal section through the first acoustic block;

Figures 4, 5 and 6 are respectively an elevation, a plan and an end view of a second acoustic block;

Figure 7 shows an external corner acoustic block; and

Figure 8 shows an internal corner acoustic block.

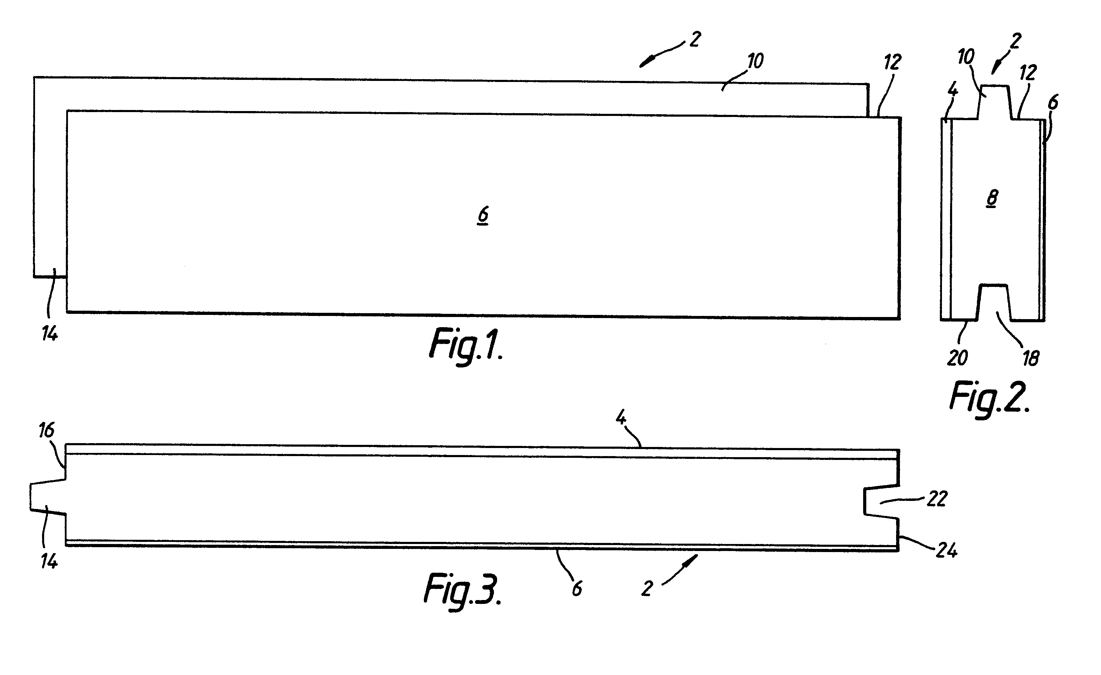

Referring to Figures 1 to 3, there is shown an acoustic block 2 having a first part 4, a second part 6 and a third part 8. As can be seen from Figure 2, the third part 8 is positioned between the first and the second parts 4, 6.

The first part 4 is formed of a sound deadening material which is known as woodwool. The third part is formed of a foam material which is a polyisocyanurate foam material.

The acoustic block 2 is such that a plurality of the blocks can be assembled on top of one another to form an acoustic screen which is substantially free standing. The acoustic block 2 is such that a plurality of the acoustic blocks are sufficiently thick that they can stand freely on top of one another in a dry mounted condition, whereby the acoustic screen can be dismantled block by block after use and the acoustic blocks can then be re-used.

The acoustic block 2 is provided with locating means for mechanically locating the acoustic block 2 in relation to other acoustic blocks 2 during the building of the acoustic screen. The locating means is a tongue and groove locating means and it will be seen that a tongue 10 is provided on an upper face 12 of the acoustic block 2. A tongue 14 is also provided on one side face 16 of the acoustic block 2. A groove 18 is provided on a lower face 20 of the acoustic block 2. A groove 22 is also provided on one side face 24 of the acoustic block 2. The tongues 10,14 connect to each other as can be seen from Figure 1. Similarly, the grooves 18,22 connect to each other. The tongues 10,14 and the grooves 18,22 fit together in order to locate the acoustic blocks 2 together to form the acoustic screen.

An acoustic screen built of the acoustic blocks 2 will be effective to reduce the level of sound transmission through the acoustic screen. Thus the acoustic screen can be used in situations where noise from a building site, a part of a factory or another place would prevent normal efficient business in an adjacent place such for example in adjacent shops, supermarkets, restaurants or offices. The acoustic screen can be constructed to any desired and appropriate height and length.

Preferably, the acoustic blocks 2 will be 2400mm long, 600mm high and 300mm thick. Also preferably, the first part 4 is 50mm thick, the second part 6 is 10mm thick, and the third part 8 is 240mm thick.

The acoustic block 2 may be formed as a moulded sandwich in steel moulds. Panels forming the first and the second parts may be placed on either side of the steel moulds and the polyisocyanurate foam can then be injected between the two panels. The polyisocyanurate foam will usually be injected as a two part foam which will expand to create a stable and homogeneous mass. Alternatively, a block of the polyisocyanurate or other foam may first be formed and then the first and the second parts appropriately positioned.

The board forming the second part 6 will preferably be a resin bonded wood particle board or a gypsum bonded wood particle board since such boards are Class 0 for fire resistance.

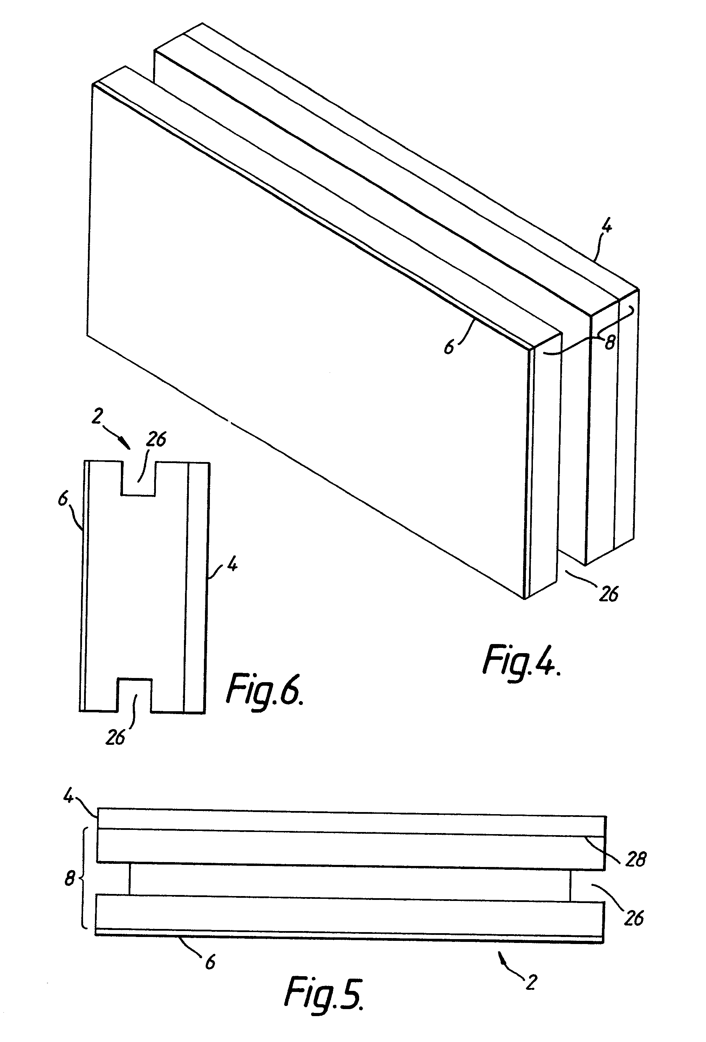

In Figures 4, 5 and 6 similar parts as in Figures 1, 2 and 3 have been given the same reference numerals for ease of comparison and understanding. In Figures 4, 5 and 6 the acoustic block 2 has a groove 26 around the entire periphery of the acoustic block 2, the groove 26 extending as shown in the plane of the acoustic block 2. The first part 4 which is formed of the woodwool is provided with a cement screed on its inner surface 28 which abuts the third part 8. The groove 26 is cut in the acoustic block 2 using a router or other cutting device.

The groove 26 may be 80mm wide and 80mm deep. Other sizes for the groove 26 may be employed. Locating means in the form of flat sided elongate strip members of rectangular cross section (not shown) fit in the grooves 26.

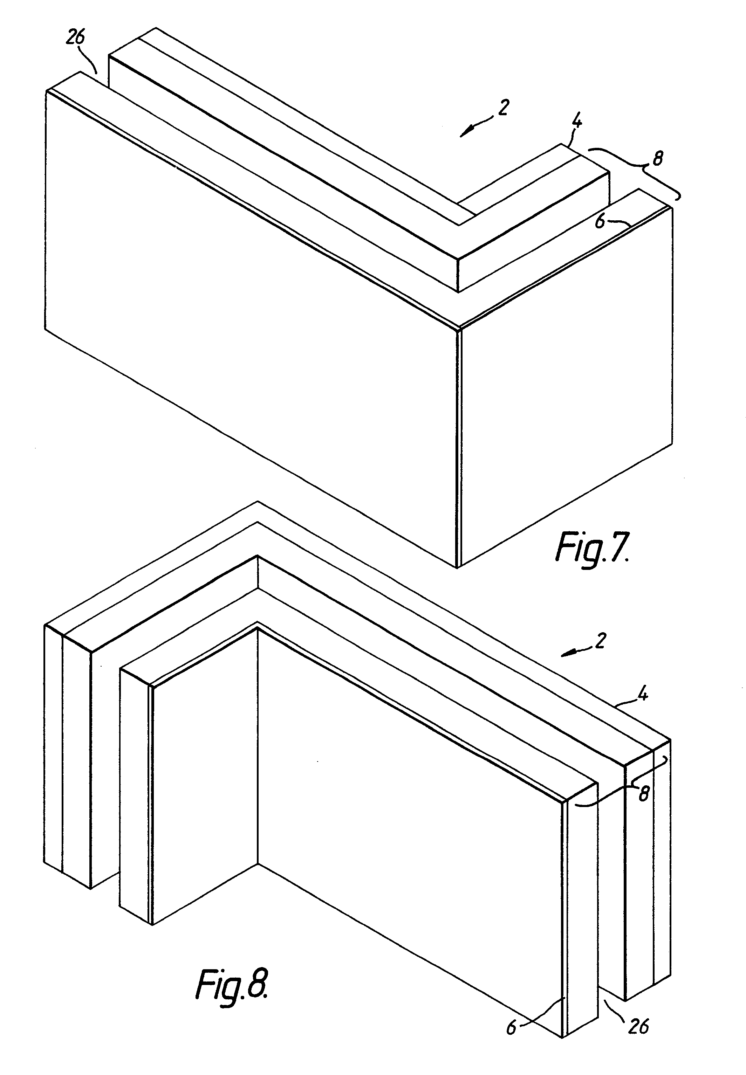

In Figures 7 and 8, similar parts have again been given the same reference numerals as in previous Figures. Figure 7 shows an external corner acoustic block 2 with a 90° corner. Figure 8 shows an internal corner acoustic block 2 with a 90° corner.

It is to be appreciated that the embodiments of the invention described above with reference to the accompanying drawings have been given by way of example only and that modifications may be effected. Thus, the first part 4 which is formed of the woodwool will usually be pre-screeded but the pre-screeding may be omitted if desired.

Special acoustic blocks may be provided for creating openings with close fitting doors, for example where a complete closure is needed with no other means of access.

The acoustic wall may be constructed by commencing with a single course of blocks laid on to an existing floor finish and bedded into a bed of sprayed foam. The sprayed foam would not form a structural element but would serve to locate the acoustic wall and to seal it against the passage of sound waves underneath the acoustic wall. The sprayed foam may advantageously alternatively be foam which is inside an envelope, for example of polyethylene plastics material. Then the acoustic blocks do not stick to the sealing foam material, which facilitates dismantling of an acoustic screen and re-using of the acoustic blocks. When the acoustic wall is completed, further sealing foam can be injected into the groove 18 formed in the lower face 20 of the lowermost acoustic blocks 2 in the acoustic wall. After the laying of the lowermost single course of acoustic blocks on the bed of sprayed foam, the wall construction can proceed simply by stacking further blocks in a staggered position until a space of less than 600mm is left beneath the soffit or ceiling. Depending upon the actual depth of this gap, it may be necessary to lay a final course of acoustic blocks 2, cut to size. This is easily done on site or the acoustic blocks can be cut before delivery if preferred. The final course of acoustic blocks 2 may desirably finish approximately 50mm short of the soffit.

The gap of about 50mm at the top of the acoustic board may then be covered by a framework of softwood battens which creates a framework into which the layer of foam material may be injected. This layer of foam material seals the gap against sound waves and also assists in stabilizing the wall, whilst avoiding any hard fixings which could lead to unwanted sound transmissions. The foam expands as it cures, which exerts a downward pressure on the acoustic wall, thus achieving a tighter fit between the different acoustic block courses. If desired, the framework of softwood battens may be replaced by a box section hollow member or a solid joint.

If the overall height of the acoustic wall should dictate that additional stability is required beyond that usually achieved by the shape and mass of the blocks, then the acoustic blocks can mechanically be secured to each other by means of auxiliary fastener means such as flush fitting fasteners on the face of the acoustic wall formed by the second part 6 of the acoustic blocks, and wire clips on the face of the wall formed by the first part 4 of the acoustic blocks.

As indicated above, the complete acoustic wall can have a textured spray finish, usually on the side formed by the second part 6 of the acoustic blocks 2. The spraying can be carried out without any damage to adjoining surfaces including floors and ceilings. Where necessary, the textured spray finish can be rendered graffiti-resistant. If desired, cornices may be employed where the acoustic wall joins a ceiling.

Where there is a possibility of water penetration through the acoustic screen, the side of the acoustic screen formed by the first part 4 of the acoustic blocks can be further sealed to the floor. The further seal can be continued to any desired and suitable height.

If it is desired to protect the acoustic wall from accidental damage from operation of heavy plant near the acoustic wall, then a mechanical barrier in the form of a simple fence made of scaffolding may be provided. Preferably the mechanical barrier will not be fixed closely to the acoustic wall.

The side of the acoustic wall formed by the second part 6 of the acoustic blocks 2 may be such that any decorative finish is protected from pedestrian traffic by the addition of a skirting board and/or a handrail.

When noise from an environment stops and the acoustic wall is no longer required, then the acoustic wall can easily be dismantled. Any spray finish can be cut along the joints between acoustic blocks 2. Any fasteners and/or clips employed can be removed, and then the acoustic blocks 2 can be lifted one at a time. The cutting of the joints between the acoustic blocks 2 can easily be effected with a sharp knife. When the acoustic blocks 2 have been removed, they can be re-used in another wall as and when desired. They may be re-sprayed after installation in the new wall. Any damaged blocks can be retained for re-use as cut sections.

Although the acoustic screen will normally be employed for temporary use, for example during construction activities, the acoustic screen can be used for permanent noise supression if desired, for example between offices and a shop floor in a particularly noisy factory. In the case of a permanent installation, the acoustic blocks 2 can be secured to each other by means of an adhesive spray foam or other means if desired. The acoustic screen can be used internally or externally. Where the acoustic screen is to be used externally, then a weather resistant finish may be used if desired.

If the acoustic screen, for example the acoustic wall, should be of a long length, then 90° corner acoustic blocks and/or butresses can be positioned where desired along the length of the wall.

## Claims

1. An acoustic screen comprising a plurality of acoustic blocks, each acoustic block having a first part, a second part and a third part, the third part being positioned between the first and the second parts, the first part being formed of a sound deadening material, the third part being formed of a foam material, and the acoustic blocks being such that they can be assembled on top of one another to form the acoustic screen as a substantially free standing acoustic screen.

2. An acoustic screen according to claim 1 and including locating means for mechanically locating the acoustic blocks.

3. An acoustic screen according to claim 2 in which the locating means comprises grooves in the acoustic blocks.

4. An acoustic screen according to claim 2 or claim3 in which the locating means includes separate elongate strip members.

5. An acoustic screen according to any one of the preceding claims in which the first part is made of woodwool.

6. An acoustic screen according to any one of the preceding claims in which the foam material is a fire retardant polyisocyanurate.

7. An acoustic screen according to any one of the preceding claims in which the third part is made of a resin bonded wood particle material or a gypsum bonded wood particle material.

8. An acoustic screen according to any one of the preceding claims in which the acoustic blocks are such that the first part is thicker than the second part, and such that the third part is thicker than the first part.

9. An acoustic screen according to any one of the preceding claims and which is built on a layer of foam material.

10. An acoustic screen according to any one of the preceding claims in which a top part of the acoustic screen is sealed to a ceiling with foam material.

**Fig.1.**

**Fig.2.**

**Fig.3.**

EP 0 369 595 A1

4

6

8

2

26

26

*Fig.4.*

6

4

26

*Fig.6.*

26

4

28

8

26

6

2

*Fig.5.*

Fig.7.

Fig.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 227 394 (BAYER)<br>* P 6 (5-38); p 7 (1-24); Fig 1-6 * | 1,2,4 | E 04 B 1/84<br>B 32 B 7/02<br>E 04 B 1/86 |
| A | FR-A-2 169 655 (ASAHI)<br>* P 3 (10-40); p 4 (1-40); Fig 1-5 * | 1-4 | |
| A | GB-A-2 084 076 (TORVALE)<br>* P 1 (45-56) * | 5 | |
| A | PATENT JOURNAL, vol 14, no 5, May 1981<br>Republic of South Africa, Application<br>No 80/3462 KENNETH UNIFOAM "A Laminated<br>insulating sheet material and a process<br>for the manufacture thereof" Page 148<br>* Abstract * | 5 | |
| A | FR-A-2 287 335 (IMPERIAL CHEMICAL)<br>* P 1 (4-18),(26-40); p 2 (14-32) * | 1,6 | |

TECHNICAL FIELDS
SEARCHED (Int. Cl.5)

E 04 B

The present search report has been drawn up for all claims

| Place of search | Date of completion of the search | Examiner |
|---|---|---|
| THE HAGUE | 10-01-1990 | BARBAS A. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P0401)